# EUROPEAN PATENT SPECIFICATION

(11) **EP 2 803 134 B1**
(45) Date of publication and mention of the grant of the patent: **16.12.2020**
(21) Application number: 12701086.6
(22) Date of filing: 11.01.2012
(51) Int. Cl.: H02M 7/49

(54) **GENERATION OF SWITCHING SEQUENCE FOR A CASCADED MULTILEVEL CONVERTER**
GENERIEREN DER SCHALTSEQUENZ FÜR EINEN KASKADIERTEN MEHRPUNKTUMRICHTER
GÉNÉRER UNE SÉQUENCE DE COMMUTATION POUR CONVERTISSEUR EN CASCADE À NIVEAUX MULTIPLES

(43) Date of publication of application: 19.11.2014
(73) Proprietor: Bombardier Transportation GmbH, 10785 Berlin (DE); Technische Universität Dresden, 01069 Dresden (DE)
(72) Inventor: ACEITON, Roberto, 68165 Mannheim (DE)
(74) Representative: Patentanwälte Bressel und Partner mbB
(86) International application number: PCT/EP2012/050373
(87) International publication number: WO 2013/104418

(56) References cited:
- EP-A2- 0 848 486
- CA-A1- 2 663 324
- US-A1- 2011 198 936
- ANGULO M ET AL: "Level-shifted PWM for Cascaded Multilevel Inverters with Even Power Distribution", POWER ELECTRONICS SPECIALISTS CONFERENCE, 2007. PESC 2007. IEEE, IEEE, PISCATAWAY, NJ, USA, 17 June 2007 (2007-06-17), pages 2373-2378, XP031218637, ISBN: 978-1-4244-0654-8
- FUKUTA Y ET AL: "Reduced common-mode modulation strategies for cascaded multilevel inverters", IEEE TRANSACTIONS ON INDUSTRY APPLICATIONS, IEEE SERVICE CENTER, PISCATAWAY, NJ, US, vol. 39, no. 5, 1 September 2003 (2003-09-01), pages 1386-1395, XP011101683, ISSN: 0093-9994, DOI: 10.1109/TIA.2003.816547
- Sameer Shailesh Mundukur: "Design and implementation of a Digital Controller for High Power Converters", , 31 December 2008 (2008-12-31), pages 1-121, XP055043629, Retrieved from the Internet: URL:http://repository.lib.ncsu.edu/ir/bits tream/1840.16/984/1/etd.pdf [retrieved on 2012-11-08]
- MOUZHI DONG ET AL: "A novel digital modulation scheme for multilevel cascaded H-bridge inverters", POWER ELECTRONICS SPECIALISTS CONFERENCE, 2008. PESC 2008. IEEE, IEEE, PISCATAWAY, NJ, USA, 15 June 2008 (2008-06-15), pages 1675-1680, XP031300209, ISBN: 978-1-4244-1667-7

## Description

The invention relates to a method of operating an electric cascaded multilevel converter. Furthermore, the invention relates to a control arrangement for controlling operation of an electric cascaded multilevel converter, to a cascaded multilevel converter comprising the control arrangement and to a vehicle comprising the cascaded multilevel converter.

Cascaded multilevel converters which are also named cascaded or cascade multilevel inverters are known in the art. A cascaded multilevel converter (in short: CMC) has a direct current side and an alternating current side. If the CMC is operated as an inverter the direct current which is input on the direct current side is converted to an alternating current on the alternating current side. The term "cascaded" or "cascade" means that a plurality of individual converters, namely converters comprising an H-bridge converter, is connected in series to each other on the alternating current side of the CMC. Therefore, the total alternating voltage on the alternating current side of the CMC is equal to the sum of the alternating voltages on the alternating current sides of the individual converters. In this specification, the individual converters of the CMC are called rectifiers although the rectifiers can be operated as inverters in case of a cascaded multilevel inverter. The term "rectifier" does not limit the operation of the CMC to the operation as a rectifier. However, a preferred application is the use of the CMC as a rectifier for the purpose of transferring electric energy from a railway electric network to traction motors of rail vehicles. Especially in this application, the individual converters or rectifiers of the CMC can be connected in parallel to each other on the direct current side of the CMC so that the two direct current side connections of all rectifiers are connected to the same two electric potentials.

As mentioned, each of the rectifiers comprises an H-bridge circuit, i.e. the circuit comprises two branches and there is a series connection of two controllable switches in each branch. A freewheeling valve, such as a freewheeling diode, is connected anti-parallel wise to each controllable switch. The alternating current side connections of the rectifiers are realized in between the series connections of the switches of the two branches. Other terms for "branch" are "bridge" or "phase leg".

Since the rectifiers of the CMC are connected in series to each other on the alternating current side of the CMC, each rectifier comprises an electrical connection to a neighboring, consecutive rectifier, so that the two rectifiers are connected at in each case one of their alternating current side connections. There are two rectifiers which form one of the two external alternating current side connections of the CMC and - if the CMC comprises more than two rectifiers - all rectifiers in between the two external rectifiers have two neighboring rectifiers in the CMC. In other words, the cascaded rectifiers form a sequence according to their electrical connections to each other on their alternating current sides.

As mentioned before, the CMC can be used for providing traction motors of rail vehicles or, alternatively, other vehicles with electric energy from an energy supply network. Standard transformers of rail vehicles are heavy since they are operated at small frequencies. To replace these heavy transformers, a CMC can be combined with medium frequency- (e.g. operated at a frequency in the range from 1 to 100 kHz) DC/DC converters so that each of the direct current sides of the rectifiers of the CMC are connected to the same direct current intermediate circuit via in each case one DC/DC converter. This means that the rectifiers of the CMC are not directly connected in parallel to each other on their direct current sides, but are indirectly connected in parallel to each other via the DC/DC converters. An example will be given below.

Since the rectifiers are connected in parallel to each other on their direct current side, energy is transferred during operation of the CMC via different rectifiers (or inverters if operated correspondingly). Furthermore, not all of the rectifiers are operated in the same manner at all times during operation of the CMC so that only a few of the rectifiers may transfer a substantial amount of energy at a time while the other rectifiers may not transfer energy. Uneven use of the rectifiers over long periods of time may lead to uneven wear and, therefore, failure of the CMC before time. Furthermore, uneven use of the rectifiers affects the voltage on the direct current side of the converter, since the DC voltage of rectifiers which are not operated declines to zero. In practice, there may be for example 8 to 20, in particular 10 to 16 rectifiers in a CMC.

It is known to use phase shifted pulse width modulation (PS-PWM) for producing a pulse width modulation signal and using this signal in order to produce control signals for controlling the switching state of the CMC. A step-like change of the PWM-signal triggers the switching of one or more switches of the CMC. In PS-PWM the PWM-signal is produced using carrier signals which are shifted in the time domain, i.e. the carrier signals are phase shifted. Using this kind of control of the switching state automatically results in even use of the different rectifiers over long periods of time.

Another type of PWM-techniques is known as level shifted PWM (LS-PWM). One advantage of the LS-PWM compared to the PS-PWM is the spectral characteristic of the technique, i.e. switching harmonics of the LS-PWM have little or no negative effect on other components of the system, in particular in railway networks. The shape of the voltage spectrum obtained with LS-PWM is therefore of great interest for traction applications, as it simplifies the design procedure of on-board filters needed for EMC compliance.

In LS-PWM, the different carrier signals are shifted with respect to the signal level. The result of the LS-PWM process is a multilevel PWM-signal which defines the output voltage level of the CMC. However, at most of the possible levels of the multilevel PWM-signal there are several different corresponding switching states of the CMC which would result in the same converting effect of the CMC, although different switches would be on and off. In other words, the multilevel PWM-signal defines the converting properties (i.e. the relation of the alternating voltage on the AC side to the direct voltage on the DC side) unambiguously, but does not define the switching state unambiguously. Therefore, uneven use of the different rectifiers may occur as mentioned above.

Angulo, M. et al. "Level-shifted PWM for cascaded multilevel inverters with even power distribution", POWER ELECTRONICS SPECIALISTS CONFERENCE, 2007. PESC 2007. IEEE, IEEE, PISCATAWAY, NJ, USA, 17 JUNE 2007, pages 2373-2378, XP031218637, ISBN: 978-1-4244-0654-8 describes the control of a converter using Phase Disposition PWM, wherein carrier signals at different levels are used in order to control the switching of the switches of the converter. The converter comprises a number of cells and each cell comprises an H-bridge having two branches of controllable switches connected in series to each other. For the control, a number of the carrier signals is used which is equal to the total number of the branches of the cells. The carriers are alternated in each modulation cycle of operating the converter.

Mouzhi Dong et al., "A novel digital modulation scheme for multilevel cascaded H-bridge inverters", Power Electronics Specialists Conference, 2008, IEEE, 15 June 2008, pages 1675 to 1680, ISBN 978-1-4244-1667-7, describes a digital multilevel modulation scheme for operating a multilevel cascaded H-bridge inverter. A pattern rotation for even power distribution is described, whereby different possible switching modes that would produce the same output voltage are rotated. To avoid extra switching duty cycles of the inverter are redistributed without affecting the inverter phase voltage.

EP 0 848 486 A2 describes a pulse width modulation method for two-point-inverters which are connected in series to each other. The method uses Phase Shifted PWM, wherein a phase shift is introduced across all of the carrier signals.

It is an object of the present invention to provide a method of operating an electric cascaded multilevel converter, a corresponding control arrangement, a corresponding cascaded multilevel converter including the control arrangement and a vehicle (in particular a rail vehicle) comprising the cascade multilevel converter which arrange for even use of the different rectifiers of the CMC. Therein, the advantages of a level shifted pulse with modulation technique for controlling the switching state of the CMC shall be achieved. Preferably, the solution shall also handle situations in which one or more than one of the rectifiers cannot be operated due to a failure. Furthermore, it is preferred that the control can be implemented using digital data processing and/or shall provide for similar alternating voltage wave forms on the alternating current sides of neighboring rectifiers of the CMC.

The attached claims define the scope of protection.

It is proposed to use a level shifted pulse width modulation technique for producing a multilevel pulse width modulation signal as described above. In order to provide for even use of the rectifiers of the CMC over time, at least one logic sequence of the rectifiers in operation is predefined and a change of the switching state of the CMC, which is required according to the multilevel PWM-signal, is performed by controlling the rectifier which is the next rectifier in the logic sequence. In other words, the rectifiers are selected one after the other according to the logic sequence each time when a switching action is required in order to produce a switching state which corresponds to the current multilevel PWM-signal. The term "logic" sequence is used to distinguish the sequence from the electrical sequence of the rectifiers according to their electrical connections in the CMC. It is preferred that these sequences differ, as will be described below.

The logic sequence guarantees that the different rectifiers of the CMC are used evenly, at least over longer periods of time.

Of course, it may happen that the updated multilevel pulse width modulation signal requires a switching action which can be performed using one specific switch or one specific rectifier only. For example, the switching state of the CMC in which all individual rectifiers have the same individual switching state can be achieved only in one way.

According to the claims, a method is proposed of operating an electric cascaded multilevel converter comprising a plurality of rectifiers, wherein each rectifier comprises a H-bridge circuit having two branches each comprising two switches connected in series to each other, wherein the rectifiers are connected in series to each other on an alternating current side of the cascaded multilevel converter so that the total alternating voltage on the alternating current side of the cascaded multilevel converter is equal to the sum of the alternating voltages on alternating current sides of the rectifiers, and wherein the method comprises:
- repeatedly producing a level number according to a multilevel pulse width modulation signal in a level-shifted pulse width modulation process that uses a number of level-shifted carrier signals, wherein the multilevel pulse width modulation signal comprises an integer of possible signal levels corresponding to the integer of converting states of the converter and wherein the level number corresponds to a respective one of the converting states and of the possible signal levels ,
- outputting the level number to a control device for controlling the switches of the rectifiers by generating and outputting corresponding control signals,
- during operation of the control device, each time when the level number that is output to the control device changes, selecting one of the rectifiers according to a predefined repeating sequence of the rectifiers in operation and performing the required change of the switching state by controlling the selected rectifier.

Furthermore, a control arrangement is proposed for controlling operation of an electric cascaded multilevel converter comprising a plurality of rectifiers, wherein each rectifier comprises a H-bridge circuit having two branches each comprising two switches connected in series to each other, wherein the rectifiers are connected in series to each other on an alternating current side of the cascaded multilevel converter so that the total alternating voltage on the alternating current side of the cascaded multilevel converter is equal to the sum of the alternating voltages on alternating current sides of the rectifiers, and wherein:
- the arrangement comprises a signal generator adapted to repeatedly produce a level number according to a multilevel pulse width modulation signal in a level-shifted pulse width modulation process that uses a number of level-shifted carrier signals, wherein the multilevel pulse width modulation signal comprises an integer of possible signal levels corresponding to the integer of converting states and wherein the level number corresponds to a respective one of the converting states and of the possible signal levels,
- the arrangement comprises a control device adapted to control the switches of the rectifiers by generating and outputting corresponding control signals,
- an output of the signal generator is connected to an input of the control device for transferring the level number of the multilevel pulse width modulation signal to the control device,
- the control device is adapted, each time when the level number that is transferred to the control device changes, to select one of the rectifiers according to a predefined repeating sequence of the rectifiers in operation and to perform the required change of the switching state by controlling the selected rectifier.

The invention also includes a cascaded multilevel converter comprising the control arrangement according to one of the embodiments described in this specification and includes a rail vehicle comprising the cascaded multilevel converter.

The term "repeating" sequence means that the sequence starts again after the last element of the sequence, i.e. after the last rectifier.

In particular, the multilevel pulse width modulation signal is produced by calculating the signal. According to a specific embodiment, the signal is calculated by digital data processing. For example a corresponding digital signal processor (DSP) may be used.

Typically, the number of level-shifted carrier signals is equal to the number of branches of the rectifiers in operation. Since the rectifiers comprise an H-bridge having two branches, the number of level-shifted carrier signals is equal to the number of rectifiers multiplied by two. One way of calculating the multilevel pulse width modulation signal is to compare the value of a time-dependent reference signal repeatedly (in particular cyclically) with the current value of each of the level-shifted carrier signals and to add 1 for each comparison in which the value of the reference signal is larger than the respective carrier signal value. The result of such a calculation of the pulse width modulation signal is an integer which is positive or zero and which corresponds to the respective level of the multilevel PWM-signal.

Correspondingly, the multilevel pulse width modulation signal comprises two times the number of the branches plus one.

In many cases, the carrier signals are triangular carrier signals. For example, the level-shifted carrier signals may also be phase-shifted or may be in phase. Therefore, the level shifted PWM-carrier signal disposition may be a so-called phase disposition, a so-called phase opposed disposition or a so-called alternated phase opposed position. Other dispositions are possible.

The level number according to the multilevel pulse width modulation signal is output to the control device for controlling the switches of the rectifiers by generating and outputting corresponding control signals. The task of this control device is therefore to produce the control signals using the information which is inherent in the multilevel pulse width modulation signal. Preferably, the multilevel PWM-signal is repeatedly (in particular cyclically) produced and is either output to the control device every time immediately after the repeated production or continuously or is output to the control device if the level of the multilevel PWM-signal has changed. In the first case (repeated or continuous outputting of the multilevel PWM-signal) the control device preferably checks if the level of the signal has changed. In any case, it is preferred that the control device causes a switching action of any of the switches of the CMC only if the level of the signal has changed. One way of checking if the level has changed is to compare a measure of the current switching state, which measure corresponds to one of the possible levels of the multilevel PWM-signal, with the current multilevel PWM-signal. Furthermore, it is preferred that the multilevel PWM-signal is updated sufficiently often and the multilevel PWM-signal is output to the control device sufficiently often, so that the control device is able to act on any change of the signal by a single level either upward or downward. In other words, it cannot happen that the control device leads to controlling a change of the switching state of the CMC which corresponds to more than one level difference.

A preferred way of the control device to define the switching state of the CMC is to define the switching state of each rectifier in operation. For an H-bridge, one number is sufficient to define the switching state of an individual rectifier. An example will be given below. Therefore, the information which defines the switching state of the CMC can be considered as a mathematical vector having a number of components, wherein each component corresponds to the individual switching state of a corresponding rectifier. For example, switching actions for changing the switching state of the CMC can be triggered by the control device any time when a component of the mathematical vector has changed.

Preferably, the control device uses only one input information from the production of the multilevel pulse width modulation signal, namely the signal itself. All other information which is needed by the control device in order to produce the control signals are prior knowledge information about the CMC and, optionally, information about any failure of one of more than one of the rectifiers. This will be described later. In particular, the failure information may indicate, which of the rectifiers is in operation and/or is out of operation. In particular, a rectifier which is out of operation can be bypassed by an electrical bypass connection.

In particular, the switching state of each of the rectifiers may be defined in the following manner: The individual rectifier comprises three different switching states which have different effects on the operational behavior of the cascaded multilevel converter, wherein
- a first of the three switching states results in a positive voltage on the alternating current side if a positive direct voltage would be applied on the direct current side of the rectifier,
- a second of the three switching states results in a zero voltage on the alternating current side if a direct voltage would be applied on the direct current side of the rectifier, the second switching state comprising sub-states having the same external effect, but consisting of different sets of individual switching states of the switches,
- a third of the three switching states results in a negative voltage on the alternating current side if a positive direct voltage would be applied on the direct current side of the rectifier.

Therefore, an operating state of the cascaded multilevel converter can be defined which has its highest level if all rectifiers in operation are in their first switching state and which has its lowest level if all rectifiers in operation are in their third switching state.

According to a preferred embodiment, during operation of the control device, each time when a change in the multilevel pulse width modulation signal requires a change of the operating state of the cascaded multilevel converter to a higher level, one of the rectifiers is selected according to a first predefined repeating (logical) sequence of the rectifiers in operation and, each time when a change in the multilevel pulse width modulation signal requires a change of the operating state of the cascaded multilevel converter to a lower level, one of the rectifiers is selected according to a second predefined repeating (logical) sequence of the rectifiers in operation. A corresponding embodiment of the control arrangement is adapted to perform this selection based on the first and second sequence.

Using separate logical sequences for increasing and decreasing the level has the advantage that the individual rectifiers are used even more evenly. Otherwise, it might happen that a particular rectifier is used more often in a specific switching state. In addition, it is preferred that the first sequence and the second sequence comprise the same order of the rectifiers in operation, but that the first sequence and the second sequence start with a different rectifier at the beginning of the operation of the CMC. This reduces the likelihood that rectifiers are brought to a new switching state according to one of the two sequences and are brought back to the previous switching state in the next switching action, according to the other sequence.

One way of operating the control device is to determine a change of the multilevel PWM-signal, determining the direction of the change (either an increase of the level or a decrease of the level) and deciding which of the two sequences is used for selecting the rectifier to be switched depending on the result of the decision.

In order to use switches of the same individual rectifier evenly, the following is proposed: information about the last sub-state of the second switching state (see above) of each rectifier in operation is saved and the rectifier is brought in a different sub-state of the second switching state the next time when the rectifier is required to be switched to the second switching state. A corresponding embodiment of the control arrangement comprises an alternator unit assigned to each rectifier, wherein the alternator units are adapted to receive respective control signals from the control device for controlling the switches of the assigned rectifier, wherein each alternator unit is adapted to bring the assigned rectifier in a different sub-state of the second switching state than the last time before when the rectifier is required to be switched to the second switching state.

As mentioned above, the control device may take the information into account which rectifier is out of operation due to a failure. It is proposed that information about a defective rectifier is transferred to the control device and the defective rectifier is excluded from the repeating sequence(s) of the rectifiers in operation. Correspondingly, the control device may be adapted to exclude anyone of the rectifiers from the repeating sequence(s) of the rectifiers in operation if information about the rectifier being defective is received by the control device. Therefore, the defective rectifier does not produce undesirable results. Since the defective rectifier is no longer part of the logical sequence, the control device will not produce control signals in order to switch any switch of this rectifier.

The failure handling described before may also be performed with other control strategies (in particular strategies not using a logical repeating sequence of the rectifiers and strategies using phase-shifted PWM). The same applies to the handling of different sub-states of the second switching state, as mentioned above.

Preferably, the predefined sequence or the predefined sequences is/are re-defined completely, if at least one of the rectifiers is taken out of operation.

The following embodiment of the method and a corresponding embodiment of the control arrangement are proposed in order to optimize the wave forms of the alternating voltages between pairs of neighbouring rectifiers, which are directly connected to each other in the CMC. These alternating voltages should not be subject to several step-like changes in short time. It is proposed that the repeating sequence(s) of the rectifiers in operation is/are predefined in such a manner that neighbouring rectifiers, which are directly connected to each other in the cascaded multilevel converter, are separated in the predefined sequence by at least one other rectifier. As mentioned above, the predefined sequence is a repeating sequence. Therefore, this preferably includes the end of the sequence which is considered to be followed by the start of the sequence.

Most preferred is that all pairs of neighbouring rectifiers, which are directly connected to each other in the cascaded multilevel converter, are separated in the predefined sequence by the maximum possible number of other rectifiers, including the end of the sequence which is considered to be followed by the start of the sequence. For example, in the case of ten rectifiers, the maximum possible number of other rectifiers which separate neighbouring rectifiers is three. However, in case of nine rectifiers the maximum possible number is two and three, since not all of the pairs of neighbouring rectifiers can be separated by three other rectifiers in the sequence. An example of ten rectifiers will be given below.

Examples of the invention will be described with reference to the attached figures in the following. The figures show:
- Fig. 1:: A simplified circuit diagram showing an arrangement for providing a traction motor of a vehicle, in particular a rail vehicle, with electric energy from an energy supply network,
- Fig. 2:: an equivalent circuit diagram showing a part of the arrangement of Fig. 1, namely a cascaded multilevel converter and the alternating current side of the converter,
- Fig. 3:: a table for illustrating possible switching states of a single H-bridge rectifier,
- Fig. 4:: a table illustrating possible switching states of a CMC comprising four individual H-bridge rectifiers,
- Fig. 5:: a circuit diagram of a control arrangement for controlling the operation of a CMC,
- Fig. 6:: different logical sequences of rectifiers of a CMC and their corresponding cell status vector,
- Fig. 7a-7f:: illustration of a process of predefining a logical sequence of rectifiers of a CMC,
- Fig. 8:: a table of the result of the process illustrated in Fig. 7a - 7f,
- Fig. 9:: a logical sequence which is the result of the process illustrated in Fig. 7 and Fig. 8,
- Fig. 10:: a flow chart illustrating possible transitions between different switching states of a CMC.

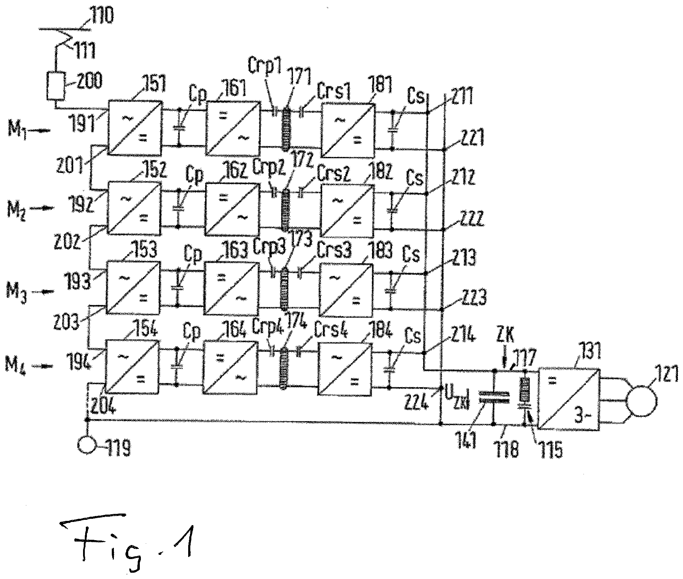

The arrangement shown in Fig. 1 comprises a plurality of modules M₁... M₄ each of which comprises a rectifier 151, 152, 153, 154, a direct current side of which is connected to an inverter 161, 162, 163, 164. There is a capacitance C_{P} connected to the direct current lines in between the rectifier 151, 152, 153, 154 and the inverter 161, 162, 163, 164. The inverter is coupled to a second rectifier 181, 182, 183, 184 via a transformer 171, 172, 173, 174. The inverter 161, 162, 163, 164, the transformer 171, 172, 173, 174 and the second rectifier 181, 182, 183, 184 may form a series resonance converter which may be operated at a resonance frequency in the medium frequency range of a few kHz to 100 kHz. Capacitances Crp and Crs are shown in Fig. 1 in the connections to and from the transformer of the respective module M.

The direct current sides of the second rectifiers 181, 182, 183, 184 are connected in parallel to each other to direct current lines 117, 118 of a direct current intermediate circuit. There are capacitances Cs at the direct current outputs of the second rectifiers and in between the direct current lines 117, 118. The voltage between the lines 117, 118 is referred to as U_{ZK}.

A filter 115 comprising a capacitance and an inductance may be connected in between the lines 117, 118. A three-phase traction inverter 131 is connected to the lines 117, 118 which provides at least one traction motor 121 with electric energy.

The rectifiers 151, 152, 153, 154 are connected in series to each other at the alternating current side of the modules M₁ to M₄. Connection 191 of rectifier 151 of module M₁ is connected to a current collector 111 via a filter 200. During operation of the vehicle (not shown), the current collector 111 is used to connect the arrangement to a line 110 of an energy supply network.

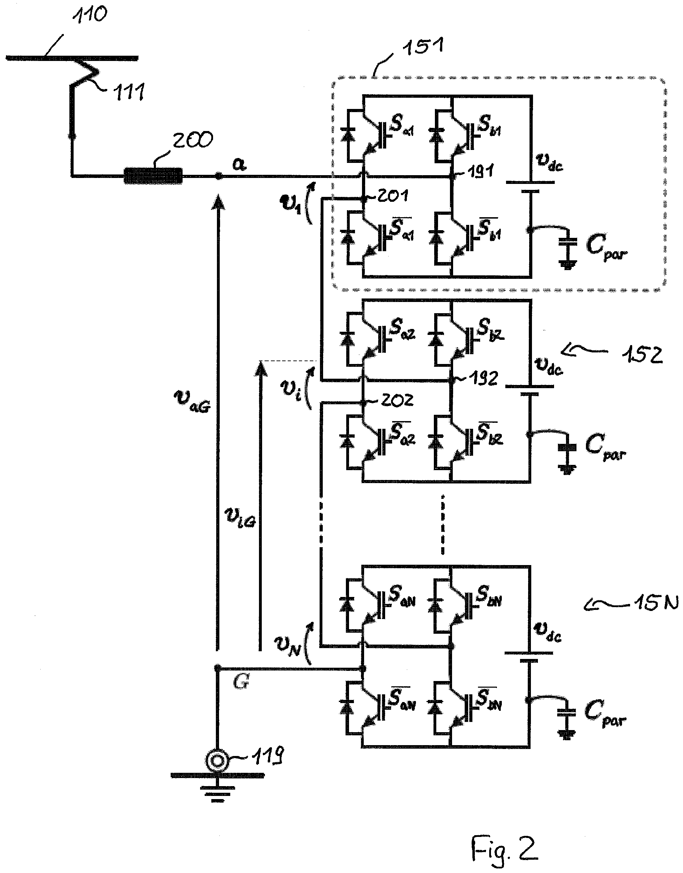

In the example shown in Fig. 1, the vehicle is a rail vehicle comprising at least one wheel 119 which rolls on rails during propulsion. The number of four modules M is an example and the number may vary in different embodiments. An alternating connection 204 of one of the modules M₄ is connected to the second direct current line 118 of the direct current intermediate circuit ZK and is connected to the at least one wheel 119 for contact to the rails. The rectifiers 151, 152, 153, 154 are connected to neighbouring rectifiers via electrical connections, such as from the second connection 201 of rectifier 151 to the first connection 192 of rectifier 152. More details of these connections and the construction of the rectifiers are shown in Fig. 2.

The dashed-line in Fig. 2 encloses, for example, rectifier 151 of Fig. 1. The rectifier 151 comprises two branches having a series connection of two controllable switches S, such as IGBTs (insulated gate bipolar transistors). The first branch comprises the switches S_{b1} and *̅S̅*̅_̅{̅*̅b̅*̅1̅}̅. The second branch comprises the switches Sₐ₁ and S̅ₐ̅₁̅. There is a freewheeling diode connected anti-parallel wise to each of the switches S.

The direct current side of each of the rectifiers shown in Fig. 2 (there are three of the rectifiers shown) is symbolized by a battery symbol and the direct voltage v_{dc} illustrates that such a direct voltage may be produced during operation as rectifier or may be present during operation as inverter. For example in the same manner as shown in Fig. 1, the rectifiers of Fig. 2 may be connected in parallel to each other on their direct current side.

In Fig. 2 the voltage situation on the alternating current side is also illustrated. The electric potential at the connection to the wheel 119 (or generally speaking at the connection to ground) is denoted by G at the bottom of Fig. 2. The electric potential at the connection to the current collector 111 via the filter 200 is denoted by a. Therefore, the total alternating voltage across the series connection of rectifiers is denoted by v_{aG}. The alternating voltage between an intermediate rectifier 152 which has two neighbouring rectifiers to ground potential is denoted by v_{iG}. Furthermore, voltages at the alternating current connections of individual rectifiers 151, 152, 15N are denoted by v₁, vᵢ, v_{N}.

In addition, the interconnections of neighbouring rectifiers 151, 152, 15N are illustrated. For example, the second alternating current connection 201 of rectifier 151 is directly connected to the first alternating current connection 192 of the neighbouring rectifier 152. The second alternating current connection 202 of the rectifier 152 is directly connected to the next neighbouring rectifier (not shown in Fig. 2). Parasitic capacitances Cₚₐᵣ are also shown on the direct current side of the rectifiers 151, 152, 15N.

The rectifiers shown in Fig. 2 form a cascaded multilevel converter. The symbols used in Fig. 2 for the switches will be used again in the same or similar manner in the following description and in other figures.

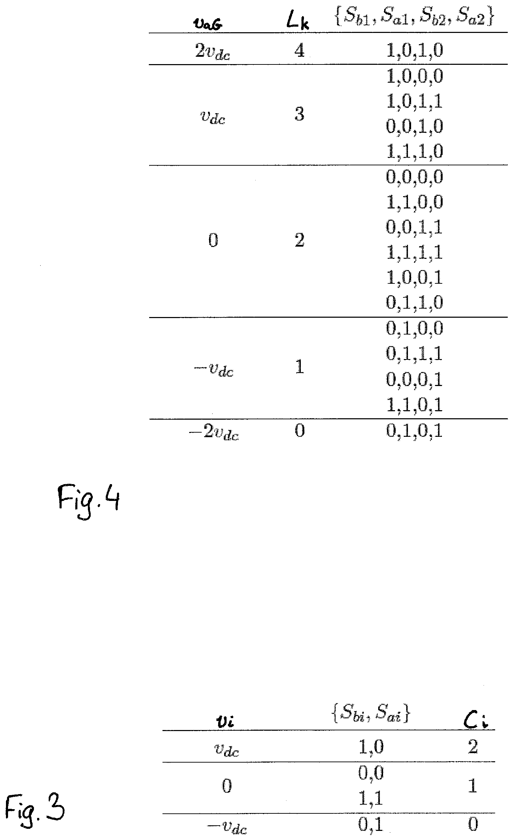

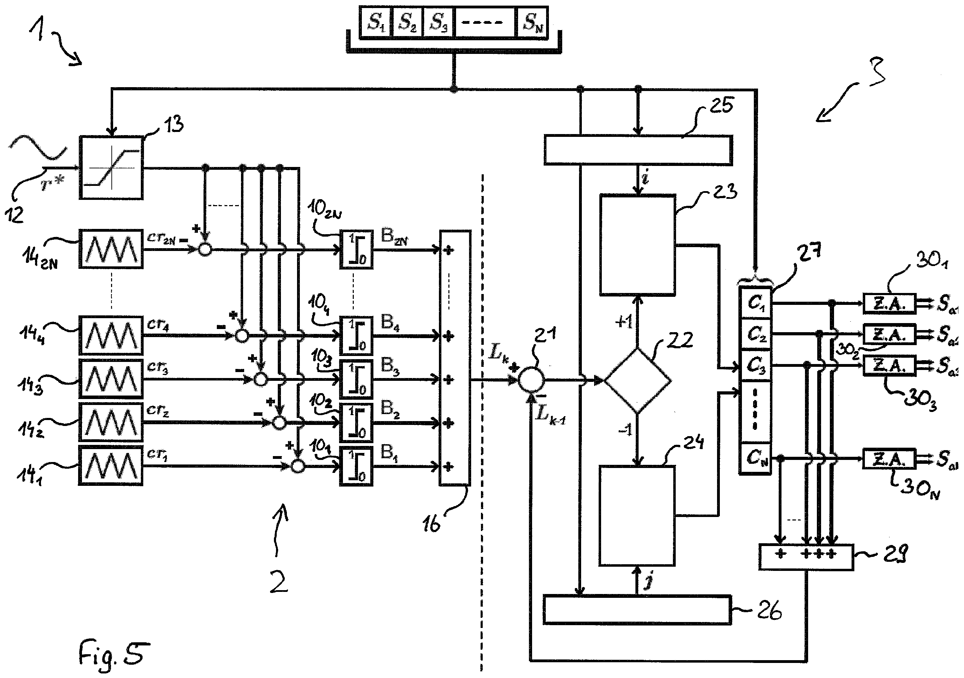

One of the main subjects in the control of a medium frequency converter arrangement as shown, for example in Fig. 1, is the modulation of the rectifiers of the CMC in a suitable manner. An example of a corresponding control arrangement will be described with reference to Fig. 5. However, some switching states of individual rectifiers and of an example of a CMC will be described first with reference to Fig. 3 and Fig. 4. In Fig. 3 the four possible switching states of a single rectifier, such as one of the rectifiers 151, 152, 15N of Fig. 2, are shown. The number of the switching state which may be 0, 1, 2. "i" is the index representing the number of the rectifier in the CMC. In the first column, second line and fourth line, the symbols v_{dc} and -v_{dc} mean a positive voltage on the direct current side of the rectifier and the negative value of this voltage. In the third line, first column "0" indicates that the voltage may also be 0. Consequently, Fig. 3 illustrates that the positive direct current side voltage v_{dc} is present on the alternating current side in switching state "2" in which the first switch S_{bi} is on (illustrated by "1") and in which the second switch Sₐᵢ is off (illustrated by "0"). Other switches in the same branch are in the opposite switching state, i.e. switch S̅_̅{̅b̅1̅}̅ is off and switch S̅ₐ̅ᵢ̅ is on. Zero voltage can be achieved (third line of the table in Fig. 3) by two different sub-states. Either, both switches S_{bi} and Sₐᵢ are off or both switches are on. The switching state is numbered by "1". The negative direct current side voltage -v_{dc} can be achieved on the alternating current side if the first switch S_{bi} is off and the second switch Sₐᵢ is on.

In Fig. 4, the switching states of a CMC having two rectifiers are shown. The first column contains five different values of the voltage v_{aG} on the alternating current side of the CMC. The second column contains the level number Lₖ of the switching state which is equal to the level number of a corresponding multilevel PWM-signal that is input to the control device for producing the control signals which result in the corresponding switching state. The top level (Lₖ = 4) which produces twice the direct current voltage 2v_{dc}, is achieved if the first switch of the first branch S_{bi} of the first rectifier is switched on, the first switch off the second branch Sₐ₁ of the first rectifier is switched off, the first switch off the first branch S_{b2} of the second rectifier is switched on and if the first switch off the second branch Sₐ₂ of the second rectifier is switched off. The possible switching states of the other levels follow from Fig. 4. There are four sub-states in levels 1 and 3 and there are six sub-states in level 2.

The control arrangement 1 illustrated in Fig. 5 comprises a signal generator 2 for producing a multilevel pulse with modulation signal, the level number Lₖ of which is illustrated at the interface (represented by a dashed line) in Fig. 5. On the right hand side of the interface the control device 3 of the arrangement 1 for producing and outputting control signals in order to obtain switching states of the CMC with correspond to the level number Lₖ is shown. In particular, the control device 3 outputs so-called firing signals for triggering switching actions performed by additional control units (for example so-called gate drive units of IGBTs) for example, and this applies to any other possible control device according to the present invention. The control device 3 may be realized by a FPGA (Field Programmable Gate Array).

The signal generator 2 comprises an input 12 for receiving a reference signal r* which is illustrated as a sine wave form. The reference signal may depend on measurement values, such as voltages and currents of the converter arrangement, e.g. the converter arrangement of fig. 1. The generation of the reference signal is well known in the art. The reference signal r* is input to a limiting unit 13 which limits the values of the reference signal to limits that correspond to the number of rectifiers of the CMC in operation. For example if the CMC comprises ten rectifiers and only nine of the rectifiers are in operation (for example due to a failure of the tenth rectifier). The reference signal r* is limited to a smaller range in between the upper limit and the lower limit compared to the operation of ten rectifiers. The size of the range between the lower limit and the upper limit corresponds to the sum of all amplitudes of the carrier signals cᵣ which are to be compared with the reference signal. For example, for a CMC comprising a number of N rectifiers, twice the number (which means 2N) level shifted carrier signals are used. Each of the carrier signals cᵣ varies within a sub-range of the range defined by the upper limit and the lower limit of the reference signal r* after being limited by the limiting unit 13, if necessary. There will be no gap between the sub-ranges of the different carrier signals cᵣ so that each value of the limited reference signal lies within one of the sub-ranges of the carrier signals cᵣ.

Therefore, more generally speaking, the limiting unit of the PWM-signal generator limits the reference signal, if necessary, to a range of values between upper limit and lower limit which is equal to the sum of the sub-ranges of the carrier signals which are needed during a particular phase of operating the CMC.

As illustrated at the top of fig. 5 the information concerning the upper ability of the rectifiers of the CMC may be input to the control arrangement 1 using a state vector, wherein the state vector has one component for each rectifier. For example, each of the components S₁, S₂, S₃, ... S_{N} (in the case of N rectifiers) are binary components which means that they may have either the value "0" or the value "1". If the value is "0" this may indicate that the corresponding rectifier is defective or is not operated. In this case, a switch may be closed which connects the two alternating current connections of the rectifier, such as the connections 191, 201 of rectifier 151 in fig. 1 and fig. 2. At least the information about the number of rectifiers which are not operated is transferred to the limiting unit 13. Generally speaking, if a CMC comprises a number of N rectifiers and if therefore the maximum range of the reference signal in case of operating all N rectifiers varies between -1 and +1 in normalized units, and if only m < N rectifiers are operated, the limiting unit limits the range of the reference signal between the upper limit and the lower limit to the size of (-1 + m/N... 1 - m/N). In Fig. 5, the carrier signals cᵣ₁ ... c_{r2N} are generated or input at a location which is represented by a respective box containing a triangular carrier signal and denoted by 14₁, 14₂ ... 14_{2N}. Each of these carrier signals cᵣ is compared with the limited reference signal at a comparison unit which is indicated by a small circle. For example, comparison means that the respective carrier signal is subtracted from the reference signal. The result is input to a binary number generator 10 that outputs a corresponding binary signal B₁ ... B_{2N}. The corresponding binary number B is for example equal to 1 if the carrier signal is smaller than the reference signal (i.e. the current value of the carrier signal is smaller than the current value of the reference signal) and is equal to 0 if the carrier signal is larger than the reference signal.

The operation of the signal generator 2 and preferably of the control device 3, is cyclically, i.e. the operation is repeated cyclically, for example triggered by a clock at a predefined clock rate. Therefore, the binary values B are produced at a sampling rate which is equal to the clock rate. The binary values B are added together by an adding unit 16 and the resulting sum is the level number Lₖ mentioned before. Due to the cyclic operation of the PWM-signal generator 2, the repeated output of updated level number values of the level number Lₖ is equivalent to the output of a multilevel PWM-signal. In other words, the current level number Lₖ defines the current level of the multilevel signal.

As mentioned above and as illustrated in connection with the example shown in Fig. 4, there are two times N plus one (2N +1) different levels of the multilevel PWM-signal if a number of N rectifiers of the CMC is operated. As further illustrated and mentioned above with reference to Fig. 4 most of the levels (all levels with the exception of the highest and the lowest level) correspond to different sub-states which can be achieved by different switching states of the CMC. Therefore, the control device 3 (or any other control device according to the present invention) has the freedom to select one of the switching states which correspond to the current value of the level number Lₖ. In the example shown in Fig. 5, the current level number Lₖ which is input to the control device 3 is compared to the previous level number Lₖ₋₁ by subtraction. The subtraction result is transferred to a classification unit which can also be named sign determining unit which decides whether the difference of Lₖ and Lₖ₋₁ is greater than 0 or smaller than 0 (or possibly equal to 0). In case of 0, no action is required, since the level number has not changed. In case of the difference being greater than 0, a signal is output to a first signal generator 23 which is operated depending on a first sequencer 25. If the difference is smaller than 0, a signal is output from the sign determination unit 22 to a second signal generating unit 24 which is operated depending on a second sequencer 26. The sequencers 25, 26 determine which rectifier is to be operated next according to their predetermined repeating sequence and they control or influence the respective signal generating unit 23 or 24 to trigger the switching of the corresponding rectifier which has been determined. For example, the first signal generating unit 23 modifies the switching state number C (see Fig. 3) of the determined rectifier in a storage 27 which stores the current switching state numbers C₁ .. C_{N} of the number of N rectifiers. While the first signal generating unit 23 always increases the switching state number (either from 0 to 1 or from 1 to 2) the second signal generating unit 24 reduces the switching state number C (either from 2 to 1 or from 1 to 0).

There is an adding device 29, which is connected to the storage 27 and which is adapted to add the switching state numbers of all rectifiers in order to produce the value of the previous switching state of the CMC which is designated by Lₖ₋₁ and which is subtracted from the current level number Lₖ by unit 21.

In case of at least one of the rectifiers being out of operation, the information which is contained in the state vector (mentioned above) is transferred to the storage 27 and the switching state number of the corresponding rectifier is set to 0. Furthermore, the information is also transferred to the first and second sequences 25, 26 which exclude the corresponding rectifier from the sequence of rectifiers. The consequence is that excluded rectifiers cannot be used by the signal generating units 23 and 24 anymore. Preferably, the sequences 25 and 26 determine new sequences of rectifiers each time when one of the rectifiers is excluded.

Before an example of the determining sequences of rectifiers is described, the alternator units 30₁ ... 30ₙ on the output side of the control device 3 are described. Each of the number of N alternator units 30 receives a trigger signal if the corresponding (i.e. the assigned) rectifier is to be switched to a new switching state. If the switching state of the rectifier is to be switched to the so-called second switching state (having the state number 1 in Fig. 3) which corresponds to zero voltage on the alternating current side, the alternator unit determines which of the two sub-switching states is to be obtained. The alternator unit alternates the two zero voltage switching states, i.e. if one of the two sub-states is established. The next time, when a zero voltage sub-state is to be established, the other zero voltage sub-state is established. The alternator unit produces or triggers the respective firing signals for the rectifier.

It was mentioned above that the adding unit 29 adds the state numbers stored in the storage 27 and that a value of 0 may be stored in the respective storage place if the corresponding rectifier is withdrawn from service. However, in this case, no action is required by the corresponding alternator unit 30 of the withdrawn rectifier. Alternatively the value "1" may be written to the respective storage place of the withdrawn rectifier, but in this case, the adding unit 29 must be informed about the withdrawn rectifier in order to disregard the value "1" in the storage place of the withdrawn rectifier. Alternatively, the adding result of the adding unit 29 may be corrected by a separate unit (not shown in Fig. 5).

The motivation behind the even usage of the rectifiers is even wear of the switches and other components of the rectifier as mentioned above. However, a further advantage of even usage of the rectifiers is even demand_for cooling the different rectifiers. Therefore, even usage means that all rectifiers can be constructed and manufactured in the same manner and be cooled in the same manner. This modular concept allows to facilitate manufacturing of the rectifiers and mounting of the CMC.

The present invention does not depend on the type of level shifted PWM, in particular does not depend on the carrier signal disposition (for example phase disposition). All dispositions result in a multilevel PWM-signal which can be used by the control device.

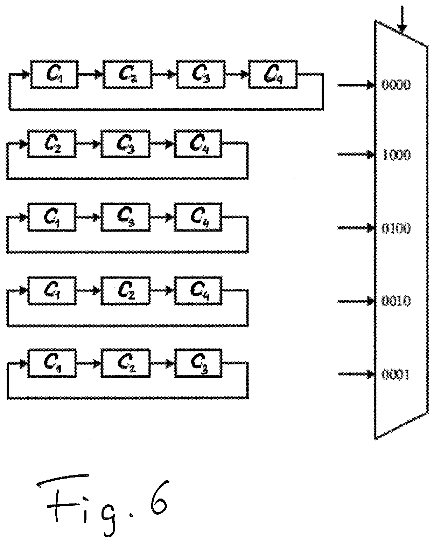

Fig. 6 shows five different logical sequences of rectifiers in case of a CMC which comprises four rectifiers. Each rectifier is represented by its state number variable C followed by the index number of the rectifier. If all rectifiers are operated, the sequence may be C₁, C₂, C₃, C₄, as illustrated at the top of Fig. 6. The corresponding state vector may comprise the components 0, 0, 0, 0, since none of the rectifiers is flagged as defective. If, however, one of the rectifiers is flagged as defective so that the corresponding component in the state vector is set to "1", the respective rectifier is removed from the sequence. If, for example, the rectifier having the index number 3 is defective or is withdrawn from operation, the state vector reads 0, 0, 1, 0 and the resulting sequence of the rectifiers is C₁, C₂, C₄, as illustrated in the fourth version of the sequence from top to bottom in fig. 6.

Fig. 6 only illustrates the concept of removing one rectifier from the sequence. It does not illustrate the most preferred version of defining the sequences of rectifiers.

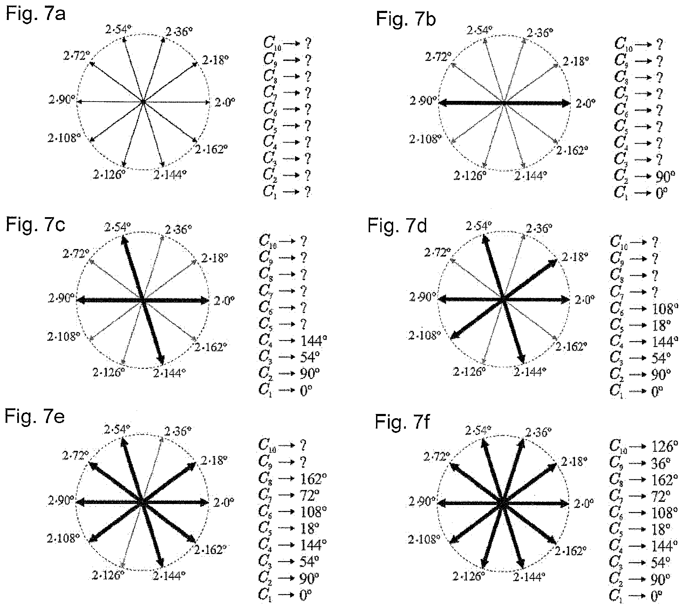

Fig. 7 to Fig. 9 illustrate an example of the most preferred version of defining the sequence of rectifiers. In the example, ten rectifiers are handled, but sequences for any other number of rectifiers greater than two can be determined in the same manner. First, as illustrated in Fig. 7a, the angular differences of the rectifiers are determined. A phase vector from the origin of a two dimensional coordinate system of unit length will be assigned to each rectifier in operation. Therefore, N phase vectors are present, if a number of N rectifiers is in operation. Fig. 7a to 7f and Fig. 8, Fig. 9 refer to the example of ten rectifiers. The phase vectors are brought in rotational positions around the origin (which can be considered as the center of the circle having a radius length of one unit) so that the angular differences between the phase vectors of each pair of neighboring vectors is equal.
Now the phase vectors will be assigned to the rectifiers.

As illustrated in Fig. 7b the phase vector of the first rectifier in the electrical sequence, i.e. the phase vector of C₁ is chosen first and therefore the angle 0° is assigned to the rectifier. However, the sequence may start with any other rectifier, since the sequence is a repeating sequence which means that the first rectifier in the sequence follows on to the last rectifier in the sequence.

Then, the next following rectifier in the electrical sequence is assigned to the phase vector which has the greatest angular distance to the phase vector of the previous rectifier in the electrical sequence.

As illustrated in Fig. 7c, then a phase vector is assigned to the next rectifier in the electrical sequence which has the greatest possible angular distance to the previous two rectifiers in the electrical sequence. Then, the phase vector is assigned to the next rectifier in the electrical sequence which has the greatest angular distance to the previous phase vector. This procedure is repeated as illustrated in Fig. 7d and Fig. 7e and fig. 7f until all phase vectors are assigned to one of the rectifiers.

More generally speaking, the phase vectors are assigned in a manner so that alternatingly two or three consecutive rectifiers in the electrical sequence correspond to phase vectors which are as symmetric as possible with respect to the origin (the center of the circle).

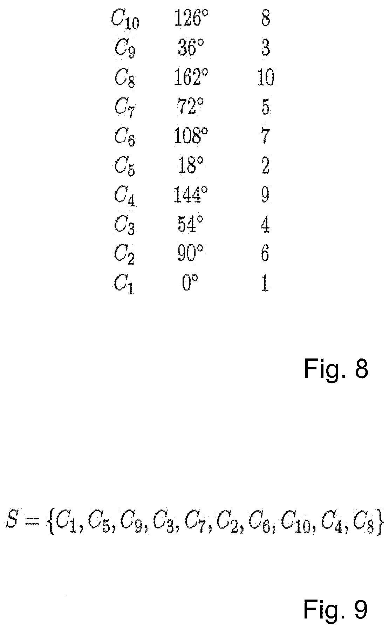

The assignment of rectifiers in the electrical sequence as represented by C₁ ... C_{N} to the phase vectors, as shown on the right hand side of Fig. 7f is also shown in fig. 8., wherein the column on the right hand side contains consecutive index numbers of the angles of the phase vectors. In other words, the index numbers in the third column represent the order of the continuously increasing angular values.

Then, using this consecutive order, the sequence of rectifiers can be determined as shown in Fig. 9. From left to right, the rectifiers are listed in the order corresponding to the column on the right hand side of Fig. 8. This method results in the largest possible distances in the logical sequence between each pair of consecutive rectifiers in the electrical sequence. The advantage is that the wave form of the alternating voltage between the alternating current connections of the respective individual rectifiers is optimized, i.e. optimized comprises minimum distortions. Therefore, long-term stability of the insulation of the CMC is increased. Furthermore, electric currents caused by parasitic capacitances between the respective rectifier and ground potential are minimized.

Another feature of the invention, as described above, is the capability of removing a defective rectifier from operation and performing the control of the switching state with a reduce number of rectifiers. As mentioned above, the defective rectifier can be bypassed by an electrical connection between the two alternating current connections of the rectifier. A corresponding switch or arrangement of switches may be used in order to establish this bypass connection. Preferably, the switch or switching arrangement can be controlled automatically by the converter control so that no manual operation of the switch or switching arrangement is required. Ideally, the operation of the CMC continues while the rectifier is withdrawn from operation. However, in practice, short periods of interruptions may occur.

In an H-bridge converter two firing signals need to be produced by the control arrangement. As mentioned above, these firing signals control the switching state of one controllable switch in each bridge, i.e. in each series connection of two switches. The switching state of the other switch in the respective bridge can be derived from the switching state of the first switch. In particular, the second switch must not be switched on while the first switch is switched on. The firing signals can be of any type known in the art. In particular, the firing signal can be a trigger signal having a step-like change of the signal level at the time when the switching process is triggered. Of course, the control signal which controls the switching state of the respective switch is a time-dependent signal or is repeated in order to switch on and switch off the switch as required by the multilevel pulse width modulation signal.

It was mentioned above that even use of the different rectifiers is a main object. In particular, even use means that the different rectifiers transfer the same amount of power during steady state operation.

The method of the present invention according to which the rectifiers are switched correspondingly to at least one pre-determined sequence of rectifiers, also has the advantage that the time derivative of the voltage on the alternating current side of the CMC is limited, since the number of rectifiers that can commutate at a time is limited.

As described above, the multilevel pulse width modulation signal is generated by a level-shifted PWM. In principle, the multilevel PWM-signal can be generated in a different process.

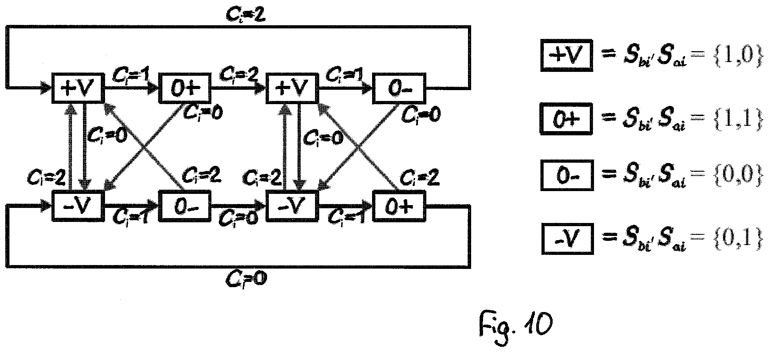

Fig. 10 describes a flow chart of possible consecutive switching processes for a single rectifier. On the right hand side of Fig. 10, the three different switching states of the rectifier are denoted by "+V", by "0" and by "-V". These switching states correspond to the states listed in Fig. 3. Since the switching state "0" which produces a zero voltage on the alternating current side has two sub-states, these sub-states are distinguished from each other by either a "+" sign or a "-" sign.

In the flow chart arrows connect the different switching states and denote the transitions from the respective switching state to possible other switching states. Each switching state occurs twice in the flow chart in order to take into account the history of the previous switching state. In this manner, the alternator unit operation described above is implemented. For example, if the rectifier is in the switching state "0-" at the top right corner of the flow chart there is a possible transition to the state "-V" according to the arrow which points to the lower left of the current switching state "0-". If a zero voltage is to be switched next, the transition to the switching state "0+" at the bottom right corner of the flow chart is the only possibility. In the figure, "Cᵢ" denotes the switching state, wherein "i" is the switching state index that can be equal to either 0, 1 or 2, according to Fig. 3. Each time when the switching state changes, there is a corresponding transition in the flow chart. Preferably, direct transitions from C₀ to C₂ (transitions from "-V" to "+V") and vice versa are not allowed, although shown in Fig. 10 for completeness.

## Claims

1. A method of operating an electric cascaded multilevel converter comprising a plurality of rectifiers (15), wherein each rectifier (15) comprises a H-bridge circuit having two branches each comprising two switches (S) connected in series to each other, wherein the rectifiers (15) are connected in series to each other on an alternating current side of the cascaded multilevel converter so that a total alternating voltage on the alternating current side of the cascaded multilevel converter is equal to the sum of the alternating voltages on alternating current sides of the rectifiers (15) and so that the cascaded multilevel converter has an integer number of converting states, each converting state defining a relation of the total alternating voltage on the alternating current side to a direct voltage on a direct current side of the cascaded multilevel converter, wherein at least one of the converting states can be realized by different switching states of the cascaded multilevel converter and wherein the method is **characterized by**:
- repeatedly producing a level number (Lₖ) of a multilevel pulse width modulation signal in a level-shifted pulse width modulation process that uses a number of level-shifted carrier signals (cr), wherein the multilevel pulse width modulation signal comprises an integer number of possible signal levels corresponding to the integer number of converting states and wherein the level number (Lₖ) corresponds to a respective one of the converting states and of the possible signal levels,
- outputting the level number (Lₖ) to a control device (3) for controlling the switches (5) of the rectifiers (15) by generating and outputting corresponding control signals,
- during operation of the control device (3), each time when the level number (Lₖ) that is output to the control device (3) changes, selecting one of the rectifiers (15) according to a predefined repeating sequence of the rectifiers (15) in operation and performing the required change of the switching state by controlling the selected rectifier (15).

2. The method of the preceding claim, wherein each of the rectifiers (15) comprises three different switching states which have different effects on the operational behaviour of the cascaded multilevel converter, wherein
- a first of the three switching states results in a positive voltage at the alternating current side if a positive direct voltage would be applied on the direct current side of the rectifier (15),
- a second of the three switching states results in a zero voltage at the alternating current side if a direct voltage would be applied on the direct current side of the rectifier (15), the second switching state comprising sub-states having the same external effect, but consisting of different sets of individual switching states of the switches (S),
- a third of the three switching states results in a negative voltage at the alternating current side if a positive direct voltage would be applied on the direct current side of the rectifier (15),
wherein an operating state of the cascaded multilevel converter can be defined which has its highest level if all rectifiers (15) in operation are in their first switching state and which has its lowest level if all rectifiers (15) in operation are in their third switching state.

3. The method of the preceding claim, wherein during operation of the control device (3), each time when the level number (Lₖ) that is output to the control device (3) changes to a higher level, selecting one of the rectifiers (15) according to a first predefined repeating sequence of the rectifiers (15) in operation and, each time when the level number (Lₖ) that is output to the control device (3) changes to a lower level, selecting one of the rectifiers (15) according to a second predefined repeating sequence of the rectifiers (15) in operation.

4. The method of claim 2 or 3, wherein information about the last sub-state of the second switching state of each rectifier (15) in operation is saved and the rectifier is brought in a different sub-state of the second switching state the next time when the rectifier (15) is required to be switched to the second switching state.

5. The method of one of the preceding claims, wherein information about a defective rectifier (15) is transferred to the control device (3) and wherein the defective rectifier (15) is excluded from the repeating sequence(s) of the rectifiers (15) in operation.

6. The method of one of the preceding claims, wherein the repeating sequence(s) of the rectifiers (15) in operation is predefined in such a manner that neighbouring rectifiers (15), which are directly connected to each other in the cascaded multilevel converter, are separated in the predefined sequence by at least one other rectifier (15).

7. The method of the preceding claim, wherein all pairs of neighbouring rectifiers (15), which are directly connected to each other in the cascaded multilevel converter, are separated in the predefined sequence by the maximum possible number of other rectifiers (15), including the end of the sequence which is considered to be followed by the start of the sequence.

8. A control arrangement for controlling operation of an electric cascaded multilevel converter comprising a plurality of rectifiers (15), wherein each rectifier (15) comprises a H-bridge circuit having two branches each comprising two switches connected in series to each other, wherein the rectifiers (15) are connected in series to each other on an alternating current side of the cascaded multilevel converter so that a total alternating voltage on the alternating current side of the cascaded multilevel converter is equal to the sum of the alternating voltages on alternating current sides of the rectifiers (15), and so that the cascaded multilevel converter has an integer number of converting states, each converting state defining a relation of the total alternating voltage on the alternating current side to a direct voltage on a direct current side of the cascaded multilevel converter, wherein at least one of the converting states can be realized by different switching states of the cascaded multilevel converter, wherein the arrangement comprises a control device (3) adapted to control the switches (S) of the rectifiers (15) by generating and outputting corresponding control signals, and **characterized in that**:
- the arrangement comprises a signal generator (2) adapted to repeatedly produce a level number (Lₖ) of a multilevel pulse width modulation signal (L_{K}) in a level-shifted pulse width modulation process that uses a number of level-shifted carrier signals (cr), wherein the multilevel pulse width modulation signal comprises an integer number of possible signal levels corresponding to the integer of converting states and wherein the level number (Lₖ) corresponds to a respective one of the converting states and of the possible signal levels,
- an output of the signal generator (2) is connected to an input of the control device (3) for transferring the level number (Lₖ) of the multilevel pulse width modulation signal to the control device (3),
- the control device (3) is adapted, each time when the level number (Lₖ) that is transferred to the control device (3) changes, to select one of the rectifiers (15) according to a predefined repeating sequence of the rectifiers (15) in operation and to perform the required change of the switching state by controlling the selected rectifier (15).

9. The control arrangement of the preceding claim, wherein each of the rectifiers (15) comprises three different switching states which have different effects on the operational behaviour of the cascaded multilevel converter, wherein
- a first of the three switching states results in a positive voltage at the alternating current side if a positive direct voltage would be applied on the direct current side of the rectifier (15),
- a second of the three switching states results in a zero voltage at the alternating current side if a direct voltage would be applied on the direct current side of the rectifier (15), the second switching state comprising sub-states having the same external effect, but consisting of different sets of individual switching states of the switches (S),
- a third of the three switching states results in a negative voltage at the alternating current side if a positive direct voltage would be applied on the direct current side of the rectifier (15),
wherein an operating state of the cascaded multilevel converter can be defined which has its highest level if all rectifiers (15) in operation are in their first switching state and which has its lowest level if all rectifiers (15) in operation are in their third switching state.

10. The control arrangement of the preceding claim, wherein the control device (3) is adapted, each time when the level number (Lₖ) that is transferred to the control device (3) changes to a higher level, to select one of the rectifiers (15) according to a first predefined repeating sequence of the rectifiers (15) in operation and, each time when the level number (Lₖ) that is transferred to the control device (3) changes to a lower level, to select one of the rectifiers (15) according to a second predefined repeating sequence of the rectifiers (15) in operation.

11. The control arrangement of claim 9 or 10, wherein an alternator unit (30) is assigned to each rectifier (15), wherein the alternator units (30) are adapted to receive respective control signals from the control device for controlling the switches of the assigned rectifier (15), wherein each alternator unit (30) is adapted to bring the assigned rectifier (15) in a different sub-state of the second switching state than the last time before when the rectifier (15) is required to be switched to the second switching state.

12. The control arrangement of one claims 8 to 11, wherein the control device (3) is adapted to exclude anyone of the rectifiers (15) from the repeating sequence(s) of the rectifiers (15) in operation if information about the rectifier (15) being defective is received by the control device (3).

13. A cascaded multilevel converter comprising the control arrangement of one of claims 8 to 12.

14. A rail vehicle comprising the cascaded multilevel converter of the preceding claim.

## Patentansprüche

1. Verfahren zum Betreiben eines kaskadierten elektrischen Mehrpunktumrichters, der eine Vielzahl von Gleichrichtern (15) umfasst, wobei jeder Gleichrichter (15) eine H-Brückenschaltung mit zwei Zweigen umfasst, die jeweils zwei Schalter (S) umfassen, die in Reihe miteinander verbunden sind, wobei die Gleichrichter (15) auf einer Wechselstromseite des kaskadierten Mehrpunktumrichters in Reihe miteinander verbunden sind, so dass eine Gesamt-Wechselspannung auf der Wechselstromseite des kaskadierten Mehrpunktumrichters der Summe der Wechselspannungen auf Wechselstromseiten der Gleichrichter (15) gleich ist, und so, dass der kaskadierte Mehrpunktumrichter eine ganzzahlige Zahl von Wandlungszuständen aufweist, wobei jeder Wandlungszustand eine Beziehung der Gesamt-Wechselspannung auf der Wechselstromseite zu einer Gleichspannung auf einer Gleichstromseite des kaskadierten Mehrpunktumrichters definiert, wobei mindestens einer von den Wandlungszuständen durch unterschiedliche Schaltzustände des kaskadierten Mehrpunktumrichters verwirklicht werden kann, und wobei das Verfahren **gekennzeichnet ist durch**:
- wiederholtes Erzeugen einer Pegelnummer (Lₖ) eines mehrpegeligen Pulsbreitenmodulationssignals in einem Pegelverschiebungs-Pulsbreitenmodulationsprozess, der eine Anzahl von pegelverschobenen Trägersignalen (cr) verwendet, wobei das mehrpegelige Pulsbreitenmodulationssignal eine ganzzahlige Zahl möglicher Signalpegel umfasst, die der ganzzahligen Zahl von Wandlungszuständen entsprechen, und wobei die Pegelnummer (Lₖ) jeweils einem von den Wandlungszuständen und den möglichen Signalpegeln entspricht,
- Ausgeben der Pegelnummer (Lₖ) an eine Steuervorrichtung (3) zum Steuern der Schalter (5) der Gleichrichter (15) **durch** Erzeugen und Ausgeben entsprechender Steuersignale,
- während des Betriebs der Steuervorrichtung (3) jedes Mal, wenn sich die an die Steuervorrichtung (3) ausgegebene Pegelnummer (Lₖ) ändert: Auswählen von einem der Gleichrichter (15) gemäß einer vordefinierten Wiederholungsreihenfolge der in Betrieb befindlichen Gleichrichter (15) und Durchführen der erforderlichen Änderung des Schaltzustands **durch** Steuern des ausgewählten Gleichrichters (15).

2. Verfahren nach dem vorangehenden Anspruch, wobei jeder von den Gleichrichtern (15) drei unterschiedliche Schaltzustände umfasst, die unterschiedliche Auswirkungen auf das Betriebsverhalten des kaskadierten Mehrpunktumrichters haben, wobei
- ein erster von den drei Schaltzuständen eine positive Spannung auf der Wechselstromseite zur Folge hat, falls eine positive Gleichspannung auf der Gleichstromseite des Gleichrichters (15) angelegt wird,
- ein zweiter von den drei Schaltzuständen eine Nullspannung auf der Wechselstromseite zur Folge hat, falls eine Gleichspannung auf der Gleichstromseite des Gleichrichters (15) angelegt wird, wobei der zweite Schaltzustand Unterzustände umfasst, welche die gleiche Außenwirkung haben, aber von unterschiedlichen Sätzen einzelner Schaltzustände der Schalter (S) gebildet werden,
- ein dritter von den drei Schaltzuständen eine negative Spannung auf der Wechselstromseite zur Folge hat, falls eine positive Gleichspannung auf der Gleichstromseite des Gleichrichters (15) angelegt wird,
wobei ein Betriebszustand des kaskadierten Mehrpunktumrichters definiert werden kann, der seinen höchsten Pegel aufweist, wenn alle in Betrieb befindlichen Gleichrichter (15) ihren ersten Schaltzustand aufweisen, und der seinen niedrigsten Pegel aufweist, wenn alle in Betrieb befindlichen Gleichrichter (15) ihren dritten Schaltzustand aufweisen.

3. Verfahren nach dem vorangehenden Anspruch, wobei während des Betriebs der Steuervorrichtung (3) jedes Mal, wenn sich die an die Steuervorrichtung (3) ausgegebene Pegelnummer (Lₖ) in einen höheren Pegel ändert, einer von den Gleichrichtern (15) gemäß einer ersten vordefinierten Wiederholungsreihenfolge der in Betrieb befindlichen Gleichrichter (15) ausgewählt wird und jedes Mal, wenn sich die an die Steuervorrichtung (3) ausgegebene Pegelnummer (Lₖ) in einen tieferen Pegel ändert, einer der Gleichrichter (15) gemäß einer zweiten vordefinierten Wiederholungsreihenfolge der in Betrieb befindlichen Gleichrichter (15) ausgewählt wird.

4. Verfahren nach Anspruch 2 oder 3, wobei Informationen über den letzten Unterzustand des zweiten Schaltzustands von jedem in Betrieb befindlichen Gleichrichter (15) gespeichert werden und der Gleichrichter in einen anderen Unterzustand des zweiten Schaltzustands gebracht wird, wenn der Gleichrichter (15) das nächste Mal in den zweiten Schaltzustand geschaltet werden muss.

5. Verfahren nach einem der vorangehenden Ansprüche, wobei Informationen über einen defekten Gleichrichter (15) an die Steuervorrichtung (3) übermittelt werden, und wobei der defekte Gleichrichter (15) aus der Wiederholungsreihenfolge (den Wiederholungsreihenfolgen) der in Betrieb genommenen Gleichrichter (15) ausgeschlossen wird.

6. Verfahren nach einem der vorangehenden Ansprüche, wobei die Wiederholungsreihenfolge(n) der in Betrieb befindlichen Gleichrichter (15) auf solche Weise vordefiniert wird (werden), dass benachbarte Gleichrichter (15), die in dem kaskadierten Mehrpunktumrichter direkt miteinander verbunden sind, durch mindestens einen anderen Gleichrichter (15) in der vordefinierten Reihenfolge voneinander getrennt werden.

7. Verfahren nach dem vorangehenden Anspruch, wobei alle Paare von benachbarten, in dem kaskadierten Mehrpunktumrichter direkt miteinander verbundenen Gleichrichtern (15) in der vordefinierten Reihenfolge durch die größtmögliche Zahl anderer Gleichrichter (15) voneinander getrennt werden, einschließlich des Endes der Reihenfolge, das so betrachtet wird, dass sich der Anfang der Reihenfolge daran anschließt.

8. Steuerungsanordnung zum Steuern eines Betriebs eines kaskadierten elektrischen Mehrpunktumrichters, der eine Mehrzahl von Gleichrichtern (15) umfasst, wobei jeder Gleichrichter (15) eine H-Brückenschaltung mit zwei Zweigen umfasst, die jeweils zwei Schalter (S) umfassen, die in Reihe miteinander verbunden sind, wobei die Gleichrichter (15) auf einer Wechselstromseite des kaskadierten Mehrpunktumrichters in Reihe miteinander verbunden sind, so dass eine Gesamt-Wechselspannung auf der Wechselstromseite des kaskadierten Mehrpunktumrichters der Summe der Wechselspannungen auf Wechselspannungsseiten der Gleichrichter (15) gleich ist, und so, dass der kaskadierte Mehrpunktumrichter eine ganzzahlige Zahl von Wandlungszuständen aufweist, wobei jeder Wandlungszustand eine Beziehung der Gesamt-Wechselspannung auf der Wechselstromseite zu einer Gleichspannung auf einer Gleichstromseite des kaskadierten Mehrpunktumrichters definiert, wobei mindestens einer von den Wandlungszuständen durch unterschiedliche Schaltzustände des kaskadierten Mehrpunktumrichters verwirklicht werden kann, wobei die Anordnung eine Steuervorrichtung (3) umfasst, die dafür eingerichtet ist, die Schalter (S) der Gleichrichter (15) durch Erzeugen und Ausgeben entsprechender Steuersignale zu steuern, und **dadurch gekennzeichnet, dass**:
- die Anordnung einen Signalerzeuger (2) umfasst, der dafür eingerichtet ist, wiederholt eine Pegelnummer (Lₖ) eines mehrpegeligen Pulsbreitenmodulationssignals (LK) in einem Pegelverschiebungs-Pulsbreitenmodulationsprozess, in dem eine Anzahl von pegelverschobenen Trägersignalen (cr) verwendet wird, zu erzeugen, wobei das mehrpegelige Pulsbreitenmodulationssignal eine ganzzahlige Zahl möglicher Signalpegel umfasst, die der ganzzahligen Zahl von Wandlungszuständen entsprechen, und wobei die Pegelnummer (Lₖ) jeweils einem von den Wandlungszuständen und den möglichen Signalpegeln entspricht,
- ein Ausgang des Signalerzeugers (2) mit einem Eingang der Steuervorrichtung (3) verbunden ist, um die Pegelnummer (Lₖ) des mehrpegeligen Pulsbreitenmodulationssignals an die Steuervorrichtung (3) zu übermitteln,
- die Steuervorrichtung (3) dafür eingerichtet ist, jedes Mal, wenn sich die an die Steuervorrichtung (3) übermittelte Pegelnummer (Lₖ) ändert, einen der Gleichrichter (15) gemäß einer vordefinierten Wiederholungsreihenfolge der in Betrieb befindlichen Gleichrichter (15) auszuwählen und die erforderliche Änderung des Schaltzustands durch Steuern des ausgewählten Gleichrichters (15) durchzuführen.

9. Steuerungsanordnung nach dem vorangehenden Anspruch, wobei jeder von den Gleichrichtern (15) drei unterschiedliche Schaltzustände umfasst, die unterschiedliche Auswirkungen auf das Betriebsverhalten des kaskadierten Mehrpunktumrichters haben, wobei
- ein erster von den drei Schaltzuständen eine positive Spannung auf der Wechselstromseite zur Folge hat, falls eine positive Gleichspannung auf der Gleichstromseite des Gleichrichters (15) angelegt wird,
- ein zweiter von den drei Schaltzuständen eine Nullspannung auf der Wechselstromseite zur Folge hat, falls eine Gleichspannung auf der Gleichstromseite des Gleichrichters (15) angelegt wird, wobei der zweite Schaltzustand Unterzustände umfasst, welche die gleiche Außenwirkung haben, aber von unterschiedlichen Sätzen einzelner Schaltzustände der Schalter (S) gebildet werden,
- ein dritter von den drei Schaltzuständen eine negative Spannung auf der Wechselstromseite zur Folge hat, falls eine positive Gleichspannung auf der Gleichstromseite des Gleichrichters (15) angelegt wird,
wobei ein Betriebszustand des kaskadierten Mehrpunktumrichters definiert werden kann, der seinen höchsten Pegel aufweist, wenn alle in Betrieb befindlichen Gleichrichter (15) ihren ersten Schaltzustand aufweisen, und der seinen niedrigsten Pegel aufweist, wenn alle in Betrieb befindlichen Gleichrichter (15) ihren dritten Schaltzustand aufweisen.

10. Steuerungsanordnung nach dem vorangehenden Anspruch, wobei die Steuervorrichtung (3) dafür ausgelegt ist, jedes Mal, wenn sich die an die Steuervorrichtung (3) übermittelte Pegelnummer (Lₖ) in einen höheren Pegel ändert, einen von den Gleichrichtern (15) gemäß einer ersten vordefinierten Wiederholungsreihenfolge der in Betrieb befindlichen Gleichrichter (15) auszuwählen und jedes Mal, wenn sich die an die Steuervorrichtung (3) übermittelte Pegelnummer (Lₖ) in einen tieferen Pegel ändert, einen von den Gleichrichtern (15) gemäß einer zweiten vordefinierten Wiederholungsreihenfolge der in Betrieb befindlichen Gleichrichter (15) auszuwählen.

11. Steuerungsanordnung nach Anspruch 9 oder 10, wobei jedem Gleichrichter (15) eine Wechselstromerzeugereinheit (30) zugeordnet ist, wobei die Wechselstromerzeugereinheiten (30) dafür ausgelegt sind, jeweilige Steuersignale von der Steuervorrichtung zu empfangen, um die Schalter der zugeordneten Gleichrichter (15) zu steuern, wobei jede Wechselstromerzeugereinheit (30) dafür ausgelegt ist, den zugeordneten Gleichrichter (15) in einen anderen Unterzustand des zweiten Schaltzustands zu bringen als das Mal davor, wenn der Gleichrichter (15) in den zweiten Schaltzustand geschaltet werden muss.

12. Steuerungsanordnung nach einem der Ansprüche 8 bis 11, wobei die Steuervorrichtung (3) dafür ausgelegt ist, jeden von den Gleichrichtern (15) aus der Wiederholungsreihenfolge (den Wiederholungsreihenfolgen) der in Betrieb befindlichen Gleichrichter (15) auszuschließen, falls Informationen dahingehend, dass dieser Gleichrichter (15) defekt ist, an der Steuervorrichtung (3) empfangen werden.

13. Kaskadierter Mehrpunktumrichter, die Steuerungsanordnung nach einem der Ansprüche 8 bis 12 umfassend.

14. Schienenfahrzeug, den kaskadierten Mehrpunktumrichter des vorangehenden Anspruchs umfassend.

## Revendications

1. Procédé de fonctionnement d'un convertisseur électrique multiniveau en cascade comprenant une pluralité de redresseurs (15), dans lequel chaque redresseur (15) comprend un circuit à pont en H ayant deux branches comprenant chacune deux commutateurs (S) connectés en série l'un à l'autre, dans lequel les redresseurs (15) sont connectés en série les uns aux autres sur un côté courant alternatif du convertisseur multiniveau en cascade de sorte qu'une tension alternative totale sur le côté courant alternatif du convertisseur multiniveau en cascade soit égale à la somme des tensions alternatives sur les côtés courant alternatif des redresseurs (15) et de sorte que le convertisseur multiniveau en cascade ait un nombre entier d'états de conversion, chaque état de conversion définissant une relation de la tension alternative totale sur le côté courant alternatif par rapport à une tension continue sur un côté courant continu du convertisseur multiniveau en cascade, dans lequel au moins l'un des états de conversion peut être réalisé par différents états de commutation du convertisseur multiniveau en cascade et dans lequel le procédé est **caractérisé par** :
- la production répétée d'un nombre de niveau (Lₖ) d'un signal de modulation de largeur d'impulsion multiniveau dans un processus de modulation de largeur d'impulsion à décalage de niveau qui utilise un nombre de signaux porteurs à décalage de niveau (cr), dans lequel le signal de modulation de largeur d'impulsion multiniveau comprend un nombre entier de niveaux de signal possibles correspondant au nombre entier d'états de conversion et dans lequel le nombre de niveau (Lₖ) correspond à l'un respectif des états de conversion et des niveaux de signal possibles,
- la sortie du nombre de niveau (Lₖ) vers un dispositif de contrôle (3) pour contrôler les commutateurs (5) des redresseurs (15) par la génération et la sortie de signaux de contrôle correspondants,
- au cours du fonctionnement du dispositif de contrôle (3), à chaque fois que le nombre de niveau (Lₖ) qui est délivré en sortie vers le dispositif de contrôle (3) change, la sélection de l'un des redresseurs (15) selon une séquence de répétition prédéfinie des redresseurs (15) en fonctionnement et la réalisation du changement requis de l'état de commutation par le contrôle du redresseur sélectionné (15).

2. Procédé selon la revendication précédente, dans lequel chacun des redresseurs (15) comprend trois états de commutation différents qui ont des effets différents sur le comportement fonctionnel du convertisseur multiniveau en cascade, dans lequel
- un premier des trois états de commutation résulte en une tension positive au niveau du côté courant alternatif si une tension continue positive était appliquée sur le côté courant continu du redresseur (15),
- un deuxième des trois états de commutation résulte en une tension nulle au niveau du côté courant alternatif si une tension continue était appliquée sur le côté courant continu du redresseur (15), le deuxième état de commutation comprenant des sous-états ayant le même effet externe, mais consistant en différents ensembles d'états de commutation individuels des commutateurs (S),
- un troisième des trois états de commutation résulte en une tension négative au niveau du côté courant alternatif si une tension continue positive était appliquée sur le côté courant continu du redresseur (15),
dans lequel un état de fonctionnement du convertisseur multiniveau en cascade peut être défini, qui a son niveau le plus élevé si tous les redresseurs (15) en fonctionnement sont dans leur premier état de commutation et qui a son niveau le plus bas si tous les redresseurs (15) en fonctionnement sont dans leur troisième état de commutation.

3. Procédé selon la revendication précédente, dans lequel pendant le fonctionnement du dispositif de contrôle (3), chaque fois que le nombre de niveau (Lₖ) qui est délivré en sortie vers le dispositif de contrôle (3) change pour un niveau supérieur, la sélection de l'un des redresseurs (15) selon une première séquence de répétition prédéfinie des redresseurs (15) en fonctionnement et, chaque fois que le nombre de niveau (Lₖ) qui est délivré en sortie vers le dispositif de contrôle (3) change pour un niveau inférieur, la sélection de l'un des redresseurs (15) selon une seconde séquence de répétition prédéfinie des redresseurs (15) en fonctionnement.

4. Procédé selon la revendication 2 ou 3, dans lequel une information relative au dernier sous-état du deuxième état de commutation de chaque redresseur (15) en fonctionnement est sauvegardée et le redresseur est amené dans un sous-état du deuxième état de commutation différent, la fois suivante à laquelle il est demandé que le redresseur (15) soit commuté vers le deuxième état de commutation.

5. Procédé selon l'une des revendications précédentes, dans lequel une information relative à un redresseur défectueux (15) est transférée au dispositif de contrôle (3) et dans lequel le redresseur défectueux (15) est exclu de la ou des séquence(s) de répétition des redresseurs (15) en fonctionnement.

6. Procédé selon l'une des revendications précédentes, dans lequel la ou les séquence(s) de répétition des redresseurs (15) en fonctionnement sont prédéfinies d'une manière telle que des redresseurs voisins (15), qui sont directement connectés les uns aux autres dans le convertisseur multiniveau en cascade, sont séparés dans la séquence prédéfinie par au moins un autre redresseur (15).

7. Procédé selon la revendication précédente, dans lequel toutes les paires de redresseurs voisins (15), qui sont directement connectés les uns aux autres dans le convertisseur multiniveau en cascade, sont séparées dans la séquence prédéfinie par le nombre maximal possible d'autres redresseurs (15), comportant la fin de la séquence qui est considérée comme devant être suivie par le début de la séquence.

8. Agencement de contrôle pour contrôler le fonctionnement d'un convertisseur électrique multiniveau en cascade comprenant une pluralité de redresseurs (15), dans lequel chaque redresseur (15) comprend un circuit à pont en H ayant deux branches comprenant chacune deux commutateurs connectés en série l'un à l'autre, dans lequel les redresseurs (15) sont connectés en série les uns aux autres sur un côté courant alternatif du convertisseur multiniveau en cascade de sorte qu'une tension alternative totale sur le côté courant alternatif du convertisseur multiniveau en cascade soit égale à la somme des tensions alternatives sur les côtés courant alternatif des redresseurs (15), et de sorte que le convertisseur multiniveau en cascade ait un nombre entier d'états de conversion, chaque état de conversion définissant une relation de la tension alternative totale sur le côté courant alternatif par rapport à une tension continue sur un côté courant continu du convertisseur multiniveau en cascade, dans lequel au moins l'un des états de conversion peut être réalisé par différents états de commutation du convertisseur multiniveau en cascade, dans lequel l'agencement comprend un dispositif de contrôle (3) adapté pour contrôler les commutateurs (S) des redresseurs (15) par la génération et la sortie de signaux de contrôle correspondants, et **caractérisé en ce que** :
- l'agencement comprend un générateur de signal (2) adapté pour produire de manière répétée un nombre de niveau (Lₖ) d'un signal de modulation de largeur d'impulsion multiniveau (L_{K}) dans un processus de modulation de largeur d'impulsion à décalage de niveau qui utilise un nombre de signaux porteurs à décalage de niveau (cr), dans lequel le signal de modulation de largeur d'impulsion multiniveau comprend un nombre entier de niveaux de signal possibles correspondant au nombre entier d'états de conversion et dans lequel le nombre de niveau (Lₖ) correspond à l'un respectif des états de conversion et des niveaux de signal possibles,
- une sortie du générateur de signal (2) est connectée à une entrée du dispositif de contrôle (3) pour transférer le nombre de niveau (Lₖ) du signal de modulation de largeur d'impulsion multiniveau au dispositif de contrôle (3),
- le dispositif de contrôle (3) est adapté, chaque fois que le nombre de niveau (Lₖ) qui est transféré au dispositif de contrôle (3) change, pour sélectionner l'un des redresseurs (15) selon une séquence de répétition prédéfinie des redresseurs (15) en fonctionnement et pour réaliser le changement requis de l'état de commutation par le contrôle du redresseur sélectionné (15).

9. Agencement de contrôle selon la revendication précédente, dans lequel chacun des redresseurs (15) comprend trois états de commutation différents qui ont des effets différents sur le comportement fonctionnel du convertisseur multiniveau en cascade, dans lequel
- un premier des trois états de commutation résulte en une tension positive au niveau du côté courant alternatif si une tension continue positive était appliquée sur le côté courant continu du redresseur (15),
- un deuxième des trois états de commutation résulte en une tension nulle au niveau du côté courant alternatif si une tension continue était appliquée sur le côté courant continu du redresseur (15),
le deuxième état de commutation comprenant des sous-états ayant le même effet externe, mais consistant en différents ensembles d'états de commutation individuels des commutateurs (S),
- un troisième des trois états de commutation résulte en une tension négative au niveau du côté courant alternatif si une tension continue positive était appliquée sur le côté courant continu du redresseur (15),
dans lequel un état de fonctionnement du convertisseur multiniveau en cascade peut être défini, qui a son niveau le plus élevé si tous les redresseurs (15) en fonctionnement sont dans leur premier état de commutation et qui a son niveau le plus bas si tous les redresseurs (15) en fonctionnement sont dans leur troisième état de commutation.

10. Agencement de contrôle selon la revendication précédente, dans lequel le dispositif de contrôle (3) est adapté, chaque fois que le nombre de niveau (Lₖ) qui est transféré au dispositif de contrôle (3) change pour un niveau supérieur, pour sélectionner l'un des redresseurs (15) selon une première séquence de répétition prédéfinie des redresseurs (15) en fonctionnement et, chaque fois que le nombre de niveau (Lₖ) qui est transféré au dispositif de contrôle (3) change pour un niveau inférieur, pour sélectionner l'un des redresseurs (15) selon une seconde séquence de répétition prédéfinie des redresseurs (15) en fonctionnement.

11. Agencement de contrôle selon la revendication 9 ou 10, dans lequel une unité d'alternateur (30) est attribuée à chaque redresseur (15), dans lequel les unités d'alternateur (30) sont adaptées pour recevoir des signaux de contrôle respectifs à partir du dispositif de contrôle pour contrôler les commutateurs du redresseur attribué (15), dans lequel chaque unité d'alternateur (30) est adaptée pour amener le redresseur attribué (15) dans un sous-état du deuxième état de commutation différent de la dernière fois avant laquelle il est demandé que le redresseur (15) soit commuté vers le deuxième état de commutation.

12. Agencement de contrôle selon l'une quelconque des revendications 8 à 11, dans lequel le dispositif de contrôle (3) est adapté pour exclure l'un quelconque des redresseurs (15) de la ou des séquence (s) de répétition des redresseurs (15) en fonctionnement si une information relative au redresseur (15) étant défectueux est reçue par le dispositif de contrôle (3).

13. Convertisseur multiniveau en cascade comprenant l'agencement de contrôle selon l'une des revendications 8 à 12.

14. Véhicule ferroviaire comprenant le convertisseur multiniveau en cascade selon la revendication précédente.
